# EUROPEAN PATENT SPECIFICATION

(11) **EP 1 025 714 B1**
(45) Date of publication and mention of the grant of the patent: **19.09.2007**
(21) Application number: 98954372.3
(22) Date of filing: 07.10.1998
(51) Int. Cl.: H04Q 3/00, H04M 3/42

(54) **SYSTEM FOR HANDLING TELEPHONE CALLS**
FERNSPRECHANRUFVERARBEITUNGSSYSTEM
SYSTEME DE GESTION D'APPELS TELEPHONIQUES

(30) Priority: 08.10.1997 GB 9721344
(43) Date of publication of application: 09.08.2000
(73) Proprietor: TELEFONAKTIEBOLAGET LM ERICSSON (publ), 164 83 Stockholm (SE)
(72) Inventor: DOE, Stephen, Richard, Portslade Sussex BN14 2DB (GB)
(74) Representative: O'Connell, David Christopher
(86) International application number: PCT/EP1998/006383
(87) International publication number: WO 1999/018737

(56) References cited:
- EP-A- 0 609 016
- WO-A-96/13927
- WO-A-97/09808
- US-A- 5 461 669
- US-A- 5 469 500
- US-A- 5 600 710

## Description

### TECHNICAL FIELD OF THE INVENTION

The invention relates to telephone switching and, in particular, to telecommunications systems allowing access to enhanced subscriber services.

### DESCRIPTION OF RELATED ART

Enhanced subscriber services, such as freephone calls and charge card calls, are now widely available.

Conventionally, all such calls are routed through a respective service node. That is, for example, a local exchange recognises that an incoming call is a freephone call, and routes the call to the relevant service node, which contains a database which relates dialled freephone numbers to physical destination numbers, and which then routes the call onto the intended destination.

EP 0609016 discloses an apparatus and method for providing services prior to call completion in a telecommunication system. In a method implemented by a telecommunications switch, a call request is made for a called party having a predetermined directory number. A determination is made if pre-connection services are to be provided for the called party, and if such services are to be provided, a service node to provide the services is identified. A further determination is made if the call request is from other than the selected service node. This permits a selected service node to originate a separate call to the called party so that services can be provided on behalf of the called party in response to a call request made by a calling party.

However, some enhanced subscriber services require interaction between the caller and the service node during call set-up.

The ability to offer such services is advantageous for telephone service providers, but the calls themselves are resource intensive. Thus, all freephone calls, say, may be routed through a service node at a particular physical location. This means that each such call generates, on average, at least twice as much traffic as a conventional call.

An alternative to this conventional solution is the so-called Intelligent Network architecture, in which local switches are connected to respective Service Switching Points, which are able to access Service Control Points, which each contain a database of enhanced subscriber services.

US Patent No. 5,377,186 describes a modification of the Intelligent Network architecture. In such a system, during call set up, signals are sent to an IN Service Control Point, and the call is then established between the local switches, to which the originating and terminating subscribers are connected, through respective Service Switching Points.

This IN architecture employs transmission loops as an alternative means of providing separation of call control and the service logic.

Moreover, the system described in US Patent No. 5,377,186 has the limitation that it cannot establish temporary connections to network resources, for example for use in prompt and collect type services, in which, for example, a calling subscriber is asked to supply information, either in the form of a voice message or by entering digits, on the basis of which the connection may be made.

### SUMMARY OF THE INVENTION

The present invention seeks to provide a system which allows service providers to deploy enhanced subscriber services in an efficient way, while using existing infrastructure to the largest possible extent.

More specifically, while retaining existing service nodes, the system of the present invention seeks to allow the provision of enhanced subscriber services from those service nodes, without requiring the calls to be routed through those nodes.

Aspects of the invention relate to the method of handling calls, and to the service node and to the switches themselves.

In broad terms, the invention relates to a method of handling telephone calls, in a conventional service node architecture, without requiring upgrading to an Intelligent Networks architecture, in which signalling and call logic are handled at the service node, while the actual call connection takes place at a local exchange level.

In particularly preferred embodiments of the invention, a double loop is set up within the local exchange, allowing the service node to communicate separately with the calling party and the called subscriber. This allows the use of prompt and collect services, in which the service node, for example, requests information from the calling party, and determines, on the basis of that information, how to process the call.

### BRIEF DESCRIPTION OF THE DRAWINGS

Figure 1 is a schematic illustration of a local switch in accordance with the invention.
Figure 2 is a schematic illustration of a second local switch in accordance with the invention.
Figure 3 is a schematic illustration of a service node in accordance with the invention.
Figure 4 illustrates a first stage in the handling of a call in accordance with the invention.
Figure 5 illustrates a second stage in the handling of a call in accordance with the invention.
Figure 6 illustrates a third stage in the handling of a call in accordance with the invention.
Figure 7 illustrates a fourth stage in the handling of a call in accordance with the invention.
Figure 8 is a flow chart describing the handling of a call as illustrated in Figures 4-7.

### DETAILED DESCRIPTION OF PREFERRED EMBODIMENTS

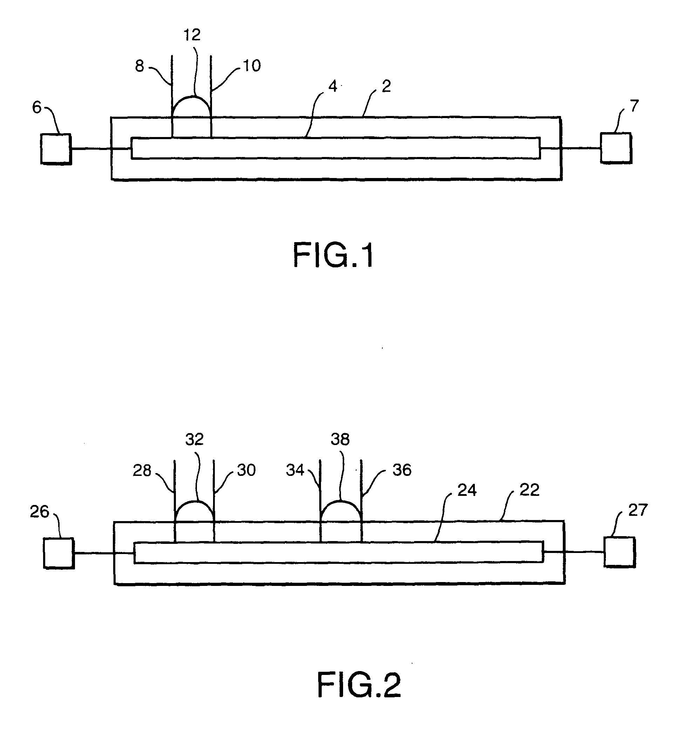

Figure 1 represents a local exchange in accordance with the invention. Preferably, each local exchange in a network is as described here. However, it is possible to route calls from separate local switches to an exchange as described. As is conventional, the exchange 2 includes a switch 4, which can interconnect subscribers 6, 7 connected thereto. Clearly, in practice, a large number of subscribers will be connected to the exchange. Further, as is conventional, the exchange includes a number of trunk routes 8, 10, of which two are shown in Figure 1, which are connected to different physical transmission ports on the switch 4.

The pair of trunks 8, 10 are connected back-to-back with a short cable 12 to form a transmission loop. Thus, these cables are physically connected, but appear to the switch 4 to be two completely separate normal trunks.

As described later, this transmission loop can be controlled in order to route a call from one subscriber to a second, while call control signalling is handled elsewhere in the network.

As an alternative, the transmission loop may be implemented in software.

Figure 2 shows a further development of the exchange shown in Figure 1. In Figure 2, the exchange 22 includes a switch 24, and two representative subscribers 26, 27 are illustrated. A first transmission loop is formed by linking trunks 28, 30 with a short cable 32, while a second transmission loop is formed by linking trunks 34, 36 by a short cable 38.

As before, the transmission loops may be implemented in software.

As will be described in more detail later, the availability of two loops allows a calling subscriber and a called subscriber to be handled separately in an enhanced subscriber service call. For example, one party may be put on hold while the other party communicates with the service node.

Thus, with two loops, the outgoing half of the first loop can be used to set up a call to the incoming half of the second loop, without involving the application at the service node. Where there is a single loop, the second half of the loop is controlled by the service node to set up the call to the terminating subscriber. Here, the application at the service node may request the connection of a resource to receive messages from, or send messages to, the originating subscriber, using the second half of the loop for connection to the resource (without involving the application directly).

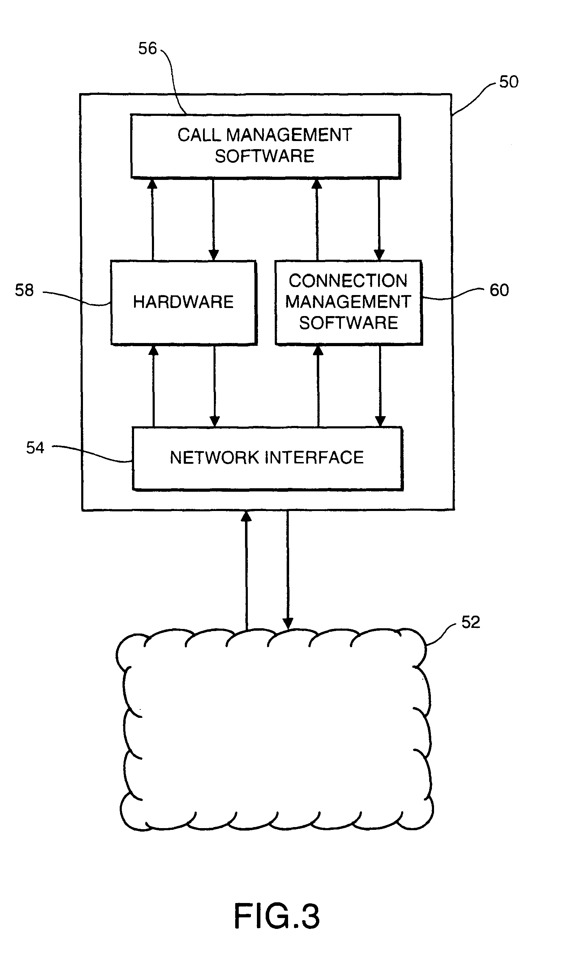

Figure 3 is a schematic illustration of the service node which handles enhanced subscriber service calls in accordance with the invention. The service node 50 is connected to the network 52 through a network interface 54. As in a conventional service node, call management software 56, running on a computer, provides the enhanced subscriber service of the service node, and directs the connections to be made at local exchanges connected to the node, for example as described above with reference to Figure 2. The service node 50 also includes various hardware components 58, of types which are conventionally found in service nodes, relating to the provision of the enhanced subscriber service. For example, the hardware 58 may include means for providing announcements to callers, means for receiving digits input by a subscriber, means for storing and retrieving voice mail messages, and so on.

The main difference between the service node 50 in accordance with the invention and a conventional service node is that the transmission and switching hardware in a conventional service node is replaced by connection management software 60. The software 60 can send signals through the network interface 54, and over the network 52 to local exchanges, in order to manipulate the transmission paths in those exchanges, using the C7 signalling protocol, for example. In the examples given above with reference to Figure 2, it is the connection management software which establishes the required connections.

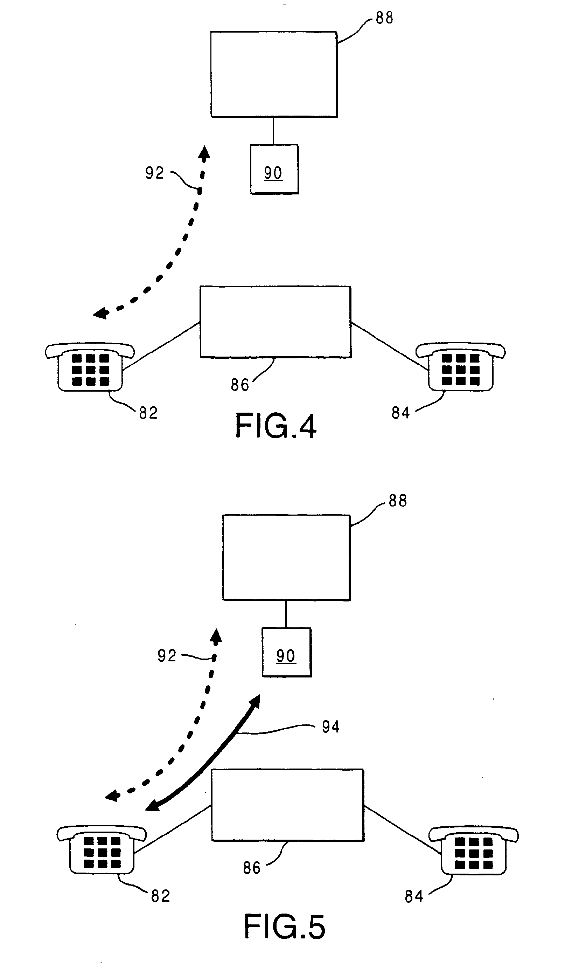

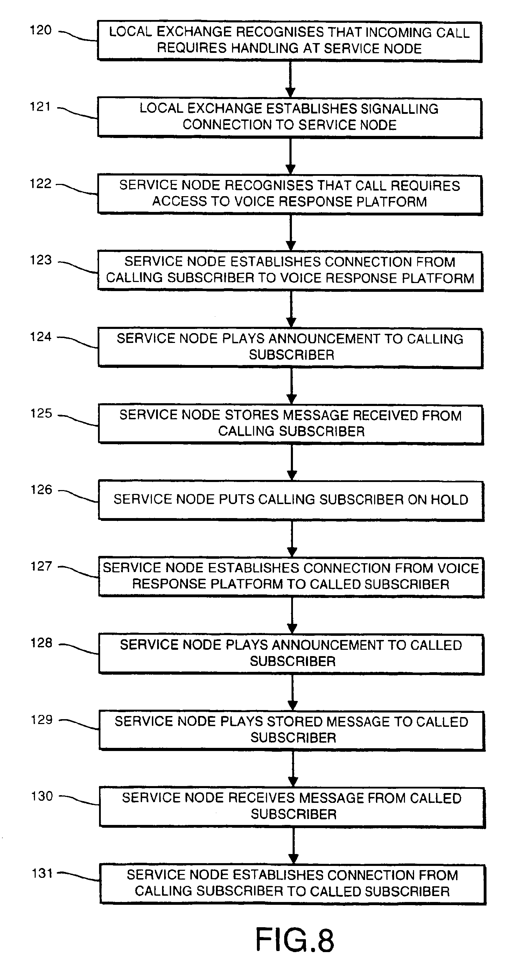

The interaction between the switching node 50 and the local exchange will now be described with reference to Figures 4-7, and the flow chart in Figure 8.

The illustrated call is a call made by a calling subscriber to a called subscriber who has a personal number, which means that the call is an enhanced subscriber service call, which is routed through a service node, and can, for example, be routed to different terminating devices at different times, at the option of the called subscriber. Moreover, the called subscriber has access to a call screening service, which means that the calling subscriber is first asked for a voice message, on the basis of which the called subscriber can determine whether or not he wishes to receive the call.

In this illustrated embodiment, the calling subscriber 82 and the called subscriber 84 are connected to the same local exchange 86, and the service node 88 is responsible for providing the requested enhanced subscriber service. The service node 88 includes a voice response platform 90, for playing relevant announcements to the parties, and including means for storing and replaying voice messages.

Figure 4 illustrates the initiation of the call from the calling subscriber 82. As is conventional, the local exchange recognises, from the dialled number, that the call requires to be handled at a service node (step 120 of the flow chart in Figure 8). The local exchange 86 identifies the required service node 88, and sends the necessary signalling 92 (step 121).

From the dialled number, the service node 88 recognises that the called subscriber has selected a call screening option, which requires that the calling subscriber should record a voice message, on the basis of which the called subscriber can determine whether or not he wishes to take the call (step 122). The service node 88 therefore directs the establishment of a bearer connection 94 between the calling subscriber 82 and the voice response platform 90 (step 123), for example using a trunk 28 (as shown in Figure 2) forming one half of a transmission loop. Using the other half 30 of the transmission loop, a message is played from the voice response platform to the calling subscriber 82, requesting that the calling subscriber leaves a voice message (step 124). The message left by the calling subscriber 82 is then stored in the voice response platform 90 (step 125).

The availability of double loops in the local exchange means that, during this phase of the call, the calling subscriber and the called subscriber can be treated entirely separately by the service node.

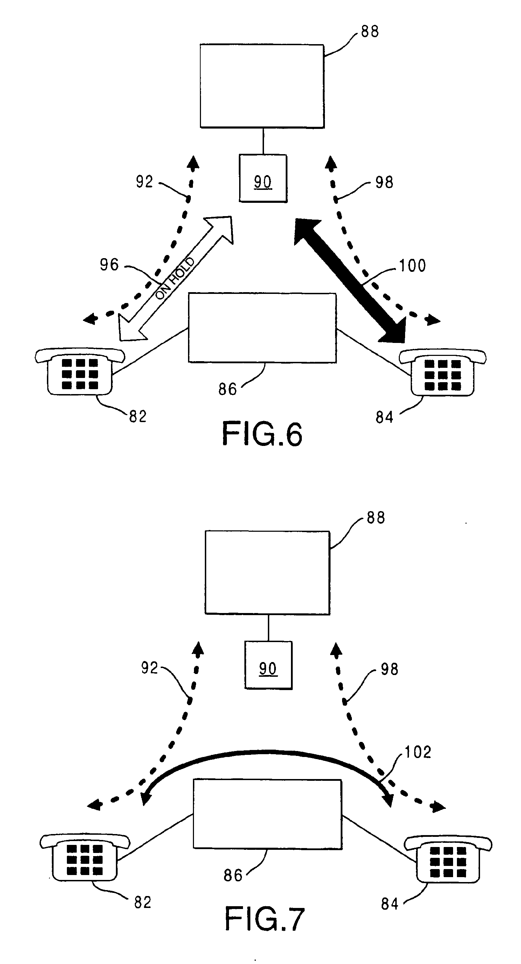

Thus, as shown in Figure 6, the calling subscriber 82 may be put on hold (step 126), as indicated by reference numeral 96, while the service node establishes a signalling connection 98 to the called subscriber 84, and a bearer connection 100 between the voice response platform 90 and the called subscriber 84 (step 127).

A message may then be played from the voice response platform 90 to the called subscriber 84, indicating that he is about to hear a voice message from the calling subscriber, and indicating what he must do (for example which digits he must enter) if he wishes either to receive the call, or not (step 128). The message stored by the calling subscriber is then played to the called subscriber (step 129). In response thereto, the calling subscriber enters the digits (step 130), indicating whether or not he wishes to receive the call.

In the event that the call is to be connected, the service node controls the local exchange 86 to establish a connection directly between the calling subscriber 82 and the called subscriber 84, and the voice platform 90 drops out of the bearer connection altogether. However, signalling connections 92, 98 are maintained (step 131). With the two parties connected to the same local exchange, it is a simple matter to establish the connection at local exchange level. If the parties are connected to different exchanges, it will probably be more appropriate for the service node to direct the call through a transmission loop at the called party's local exchange. If the called party is on another network (for example in another country), the service node may direct the call through a second transmission loop on the same as the first, thus using the loops as a means to switch in and out the announcement and digit reception resources.

The enhanced subscriber service may therefore be provided from a service node, without requiring the call traffic to be sent to and from the service node.

## Claims

1. A method of handling a telephone call from a first subscriber to a second subscriber, the call requiring management by a service node, the method comprising:
establishing a temporary bearer connection between at least one of the first subscriber and the service node (94), and the second subscriber and the service node (100);
establishing a bearer connection (102) between the first subscriber and the second subscriber, the bearer connection being at an exchange level and not passing through the service node; and
establishing signalling connections between the first subscriber and the service node (92) and between the second subscriber and the service node (98) such that the service node controls the call.

2. A method as claimed in claim 1, the method further comprising the steps of:
transmitting information from the first subscriber to the service node; and
transmitting information from the second subscriber to the service node.

3. A method as claimed in claim 2, wherein the first and second subscribers are each connected to the service node through a respective local exchange.

4. A method as claimed in claim 2, wherein the first and second subscribers may each be connected to the service node through the same local exchange (86).

5. A method as claimed in claim 1, wherein the first subscriber is connected to a network through a first subscriber's switch, and the second subscriber being connected to the network through a second subscriber's switch, the call requiring user interaction with a service node, the method further comprising the steps of:
recognising at the first subscriber's switch that the call requires handling by a service node (step 120);
establishing the signalling connection between the first subscriber and the service node through the first subscriber's switch (step 121);
recognising at the service node that the call requires user interaction (step 122);
establishing the bearer connection between the first subscriber and the service node through the first subscriber's switch (step 123);
sending a message from the service node to the first subscriber (step 124);
receiving a message from the first subscriber to the service node (step 125);
establishing the signalling connection between the second subscriber and the service node through the second subscriber's switch (step 127);
establishing the bearer connection between the first subscriber and the second subscriber through the first subscriber's switch and the second subscriber's switch, (step 131); and
maintaining the signalling connections between the first subscriber and the service node through the first subscriber's switch, and between the second subscriber and the service node through the second subscriber's switch.

6. A method as claimed in claim 5, further comprising establishing the bearer connection between the second subscriber and the service node through the second subscriber's switch (step 127) after establishing the signalling connection between the second subscriber and the service node.

7. A method as claimed in claim 6, further comprising sending a message from the service node to the second subscriber (step 128) after establishing the bearer connection between the second subscriber and the service node (step 127).

8. A method as claimed in claim 7, further comprising receiving a message from the second subscriber to the service node (step 129) after sending the message from the service node to the second subscriber (step 128).

9. A method as claimed in one of claims 5 to 8, wherein the first subscriber and the second subscriber are connected to the network through a common subscriber switch.

10. A service node (50), for handling enhanced service calls between subscribers connected to a telecommunications network, the service node comprising:
a network interface (54);
means for managing calls (56) by providing a particular enhanced service;
means for controlling connections (60) between subscribers at an exchange level; and
hardware means (58) for receiving messages from subscribers;
wherein, in response to an incoming enhanced service call from a first subscriber to a second subscriber, the means for managing calls (56) directs the means for controlling connections (60) to establish a bearer connection to the first subscriber and, after receiving a message therefrom, directs the means for controlling connections (60) to establish a bearer connection between the first subscriber and the second subscriber, the bearer connection between the first subscriber and the second subscriber not passing through the service node.

11. A service node as claimed in claim 10, wherein the means for managing calls (56) is provided in software.

12. A service node as claimed in claim 10 or 11, wherein the means for controlling connections (60) between subscribers is provided in software.

13. A service node as claimed in one of claims 10 to 12, wherein the hardware means (58) for receiving messages comprises means for recording voice messages.

14. A service node as claimed in one of claims 10 to 13, wherein the hardware means (58) for receiving messages comprises means for receiving digits supplied by subscribers.

15. A service node as claimed in one of claims 10 to 14, further comprising hardware means (58) for playing messages to subscribers.

16. A service node as claimed in one of claims 10 to 15, wherein the means for controlling connections (60) between subscribers comprises means for sending signals to exchanges, to which the subscribers are connected.

17. A telephone exchange, having first and second subscribers connected thereto, and having means for connection to a service node, the exchange comprising:
means for recognising that an incoming call from the first subscriber to the second subscriber requires connection to the service node;
means for establishing a first signalling connection between the first subscriber and the service node;
means allowing a first bearer connection between the first subscriber and the service node, in response to a signal from the service node;
means allowing a second bearer connection between the second subscriber and the service node, in response to a signal from the service node, the second bearer connection being independent of the first bearer connection;
means allowing a second signalling connection between the second subscriber and the service node;
means for establishing a third bearer connection directly between the first subscriber and the second subscriber, in response to a signal from the service node, and for breaking the first and second bearer connections, while maintaining the first and second signalling connections.

## Patentansprüche

1. Ein Verfahren zum Handhaben eines Telefonanrufes von einem ersten Teilnehmer zu einem zweiten Teilnehmer, wobei der Anruf Management durch einen Dienstknoten erfordert, das Verfahren umfassend:
Herstellen einer zeitweiligen Trägerverbindung zwischen mindestens einem von dem ersten Teilnehmer und dem Dienstknoten (94), und dem zweiten Teilnehmer und dem Dienstknoten (100);
Herstellen einer Trägerverbindung (102) zwischen dem ersten Teilnehmer und dem zweiten Teilnehmer, wobei die Trägerverbindung auf einer Vermittlungsebene ist und den Dienstknoten nicht durchläuft; und
Herstellen von Signalisierungsverbindungen zwischen dem ersten Teilnehmer und dem Dienstknoten (92) und zwischen dem zweiten Teilnehmer und dem Dienstknoten (98) derart, dass der Dienstknoten den Anruf steuert.

2. Ein Verfahren, wie in Anspruch 1 beansprucht, das Verfahren ferner umfassend die Schritte zum:
Übertragen von Information von dem ersten Teilnehmer zu dem Dienstknoten; und
Übertragen von Information von dem zweiten Teilnehmer zu dem Dienstknoten.

3. Ein Verfahren, wie in Anspruch 2 beansprucht, wobei die ersten und zweiten Teilnehmer jeder mit dem Dienstknoten durch eine jeweilige lokale Vermittlung verbunden sind.

4. Ein Verfahren, wie in Anspruch 2 beansprucht, wobei die ersten und zweiten Teilnehmer jeder mit dem Dienstknoten durch die gleiche lokale Vermittlung (86) verbunden sein können.

5. Ein Verfahren, wie in Anspruch 1 beansprucht, wobei der erste Teilnehmer mit einem Netz durch einen Switch des ersten Teilnehmers verbunden ist, und der zweite Teilnehmer mit dem Netz durch einen Switch des zweiten Teilnehmers verbunden ist, der Anruf Benutzerinteraktion mit einem Dienstknoten erfordert, das Verfahren ferner umfassend die Schritte zum:
Erkennen in dem Switch des ersten Teilnehmers, dass der Anruf Handhabung durch einen Dienstknoten erfordert (Schritt 120);
Herstellen der Signalisierungsverbindung zwischen dem ersten Teilnehmer und dem Dienstknoten durch den Switch des ersten Teilnehmers (Schritt 121);
Erkennen in dem Dienstknoten, dass der Anruf Benutzerinteraktion erfordert (Schritt 122);
Herstellen der Trägerverbindung zwischen dem ersten Teilnehmer und dem Dienstknoten durch den Switch des ersten Teilnehmers (Schritt 123);
Senden einer Nachricht von dem Dienstknoten zu dem ersten Teilnehmer (Schritt 124);
Empfangen einer Nachricht von dem ersten Teilnehmer zu dem Dienstknoten (Schritt 125);
Herstellen der Signalisierungsverbindung zwischen dem zweiten Teilnehmer und dem Dienstknoten durch den Switch des zweiten Teilnehmers (Schritt 127);
Herstellen der Trägerverbindung zwischen dem ersten Teilnehmer und dem zweiten Teilnehmer durch den Switch des ersten Teilnehmers und den Switch des zweiten Teilnehmers (Schritt 131); und
Unterhalten der Signalisierungsverbindungen zwischen dem ersten Teilnehmer und dem Dienstknoten durch den Switch des ersten Teilnehmers, und zwischen dem zweiten Teilnehmer und dem Dienstknoten durch den Switch des zweiten Teilnehmers.

6. Ein Verfahren, wie in Anspruch 5 beansprucht, ferner umfassend Herstellen der Trägerverbindung zwischen dem zweiten Teilnehmer und dem Dienstknoten durch den Switch des zweiten Teilnehmers (Schritt 127) nach Herstellen der Signalisierungsverbindung zwischen dem zweiten Teilnehmer und dem Dienstknoten.

7. Ein Verfahren, wie in Anspruch 6 beansprucht, ferner umfassend Senden einer Nachricht von dem Dienstknoten zu dem zweiten Teilnehmer (Schritt 128) nach Herstellen der Trägerverbindung zwischen dem zweiten Teilnehmer und dem Dienstknoten (Schritt 127).

8. Ein Verfahren, wie in Anspruch 7 beansprucht, ferner umfassend Empfangen einer Nachricht von dem zweiten Teilnehmer zu dem Dienstknoten (Schritt 129) nach Senden der Nachricht von dem Dienstknoten zu dem zweiten Teilnehmer (Schritt 128).

9. Ein Verfahren, wie in einem von Ansprüchen 5 bis 8 beansprucht, wobei der erste Teilnehmer und der zweite Teilnehmer mit dem Netz durch einen gemeinsamen Teilnehmerswitch verbunden sind.

10. Ein Dienstknoten (50) zum Handhaben von erweiterten Dienstanrufen zwischen Teilnehmern, die mit einem Telekommunikationsnetz verbunden sind, der Dienstknoten umfassend:
eine Netzschnittstelle (54);
Mittel zum Managen von Anrufen (56) durch Bereitstellen eines bestimmten erweiterten Dienstes;
Mittel zum Steuern von Verbindungen (60) zwischen Teilnehmern auf einer Vermittlungsebene; und
Hardwaremittel (58) zum Empfangen von Nachrichten von Teilnehmern;
wobei als Reaktion auf einen eingehenden erweiterten Dienstanruf von einem ersten Teilnehmer zu einem zweiten Teilnehmer das Mittel zum Managen von Anrufen (56) das Mittel zum Steuern von Verbindungen (60) lenkt, eine Trägerverbindung zu dem ersten Teilnehmer herzustellen, und nach Empfang einer Nachricht von dort das Mittel zum Steuern von Verbindungen (60) lenkt, eine Trägerverbindung zwischen dem ersten Teilnehmer und dem zweiten Teilnehmer herzustellen, wobei die Trägerverbindung zwischen dem ersten Teilnehmer und dem zweiten Teilnehmer den Dienstknoten nicht durchläuft.

11. Ein Dienstknoten, wie in Anspruch 10 beansprucht, wobei das Mittel zum Managen von Anrufen (56) in Software bereitgestellt ist.

12. Ein Dienstknoten, wie in Anspruch 10 oder 11 beansprucht, wobei das Mittel zum Steuern von Verbindungen (60) zwischen Teilnehmern in Software bereitgestellt ist.

13. Ein Dienstknoten, wie in einem von Ansprüchen 10 bis 12 beansprucht, wobei das Hardwaremittel (58) zum Empfangen von Nachrichten Mittel zum Aufzeichnen von Sprachnachrichten umfasst.

14. Ein Dienstknoten, wie in einem von Ansprüchen 10 bis 13 beansprucht, wobei das Hardwaremittel (58) zum Empfangen von Nachrichten Mittel zum Empfangen von Ziffern umfasst, die durch Teilnehmer zugeführt werden.

15. Ein Dienstknoten, wie in einem von Ansprüchen 10 bis 14 beansprucht, ferner umfassend Hardwaremittel (58) zum Abspielen von Nachrichten zu Teilnehmern.

16. Ein Dienstknoten, wie in einem von Ansprüchen 10 bis 15 beansprucht, wobei das Mittel zum Steuern von Verbindungen (60) zwischen Teilnehmern Mittel zum Senden von Signalen zu Vermittlungen umfasst, mit denen die Teilnehmer verbunden sind.

17. Eine Telefonvermittlung, mit dazu verbundenen ersten und zweiten Teilnehmern, und mit Mitteln für eine Verbindung zu einem Dienstknoten, die Vermittlung umfassend:
Mittel zum Erkennen, dass ein eingehender Anruf von dem ersten Teilnehmer zu dem zweiten Teilnehmer eine Verbindung zu dem Dienstknoten erfordert;
Mittel zum Herstellen einer ersten Signalisierungsverbindung zwischen dem ersten Teilnehmer und dem Dienstknoten;
Mittel, das eine erste Trägerverbindung zwischen dem ersten Teilnehmer und dem zweiten Teilnehmer erlaubt, als Reaktion auf ein Signal von dem Dienstknoten;
Mittel, das eine zweite Trägerverbindung zwischen dem zweiten Teilnehmer und dem Dienstknoten erlaubt, als Reaktion auf ein Signal von dem Dienstknoten, wobei die zweite Trägerverbindung von der ersten Trägerverbindung unabhängig ist;
Mittel, das eine zweite Signalisierungsverbindung zwischen dem zweiten Teilnehmer und dem Dienstknoten erlaubt;
Mittel zum Herstellen einer dritten Trägerverbindung direkt zwischen dem ersten Teilnehmer und dem zweiten Teilnehmer, als Reaktion auf ein Signal von dem Dienstknoten, und zum Unterbrechen der ersten und zweiten Trägerverbindungen, während die ersten und zweiten Signalisierungsverbindungen aufrechterhalten werden.

## Revendications

1. Procédé de gestion d'un appel téléphonique d'un premier abonné à un deuxième abonné, l'appel devant être géré par un noeud de service, le procédé comprenant:
l'établissement d'une connexion de support temporaire entre au moins l'un du premier abonné et du noeud de service (94), et du deuxième abonné et du noeud de service (100) ;
l'établissement d'une connexion de support (102) entre le premier abonné et le deuxième abonné, la connexion de support étant au niveau d'un central et ne passant pas par le noeud de service ; et
l'établissement de connexions de signalisation entre le premier abonné et le noeud de service (92) et entre le deuxième abonné et le noeud de service (98) de façon que le noeud de service commande l'appel.

2. Procédé selon la revendication 1, le procédé comprenant en outre les étapes consistant à :
transmettre des informations du premier abonné au noeud de service ; et
transmettre des informations du deuxième abonné au noeud de service.

3. Procédé selon la revendication 2, dans lequel les premier et deuxième abonnés sont chacun connectés au noeud de service par l'intermédiaire d'un central local respectif.

4. Procédé selon la revendication 2, dans lequel les premier et deuxième abonnés peuvent chacun être connectés au noeud de service par l'intermédiaire du même central local (86).

5. Procédé selon la revendication 1, dans lequel le premier abonné est connecté à un réseau par l'intermédiaire du commutateur d'un premier abonné, le deuxième abonné étant connecté au réseau par l'intermédiaire du commutateur d'un deuxième abonné, l'appel nécessitant une interaction de l'utilisateur avec un noeud de service, le procédé comprenant en outre les étapes consistant à :
constater, sur le commutateur du premier abonné, que l'appel nécessite un traitement par un noeud de service (étape 120) ;
établir la connexion de signalisation entre le premier abonné et le noeud de service par l'intermédiaire du commutateur du premier abonné (étape 121) ;
constater, sur le noeud de service, que l'appel nécessite une interaction de l'utilisateur (étape 122) ;
établir la connexion de support entre le premier abonné et le noeud de service par l'intermédiaire du commutateur du premier abonné (étape 123) ;
envoyer un message du noeud de service au premier abonné (étape 124) ;
recevoir un message du premier abonné au noeud de service (étape 125);
établir la connexion de signalisation entre le deuxième abonné et le noeud de service par l'intermédiaire du commutateur du deuxième abonné (étape 127) ;
établir la connexion de support entre le premier abonné et le deuxième abonné par l'intermédiaire du commutateur du premier abonné et du commutateur du deuxième abonné (étape 131) ; et
maintenir les connexions de signalisation entre le premier abonné et le noeud de service par l'intermédiaire du commutateur du premier abonné et entre le deuxième abonné et le noeud de service par l'intermédiaire du commutateur du deuxième abonné.

6. Procédé selon la revendication 5, comprenant en outre l'établissement de la connexion de support entre le deuxième abonné et le noeud de service par l'intermédiaire du commutateur du deuxième abonné (étape 127) après établissement de la connexion de signalisation entre le deuxième abonné et le noeud de service.

7. Procédé selon la revendication 6, comprenant en outre l'envoi d'un message du noeud de service au deuxième abonné (étape 128) après établissement de la connexion de support entre le deuxième abonné et le noeud de service (étape 127).

8. Procédé selon la revendication 7, comprenant en outre la réception d'un message du deuxième abonné au noeud de service (étape 129) après envoi du message du noeud de service au deuxième abonné (étape 128).

9. Procédé selon l'une des revendications 5 à 8, dans lequel le premier abonné et le deuxième abonné sont connectés au réseau par l'intermédiaire d'un commutateur d'abonné commun.

10. Noeud de service (50), pour traiter des appels de service évolués entre des abonnés connectés à un réseau de télécommunications, le noeud de service comprenant :
une interface de réseau (54) ;
un moyen pour gérer des appels (56) en fournissant un service évolué particulier ;
un moyen pour commander des connexions (60) entre des abonnés au niveau d'un central ; et
un moyen matériel (58) pour recevoir des messages d'abonnés ;
dans lequel, en réponse à un appel de service évolué entrant d'un premier abonné à un deuxième abonné, le moyen de gestion d'appels (56) ordonne au moyen de commande de connexions (60) d'établir une connexion de support au premier abonné et, après avoir reçu de celui-ci un message, ordonne au moyen de commande de connexions (60) d'établir une connexion de support entre le premier abonné et le deuxième abonné, la connexion de support entre le premier abonné et le deuxième abonné ne passant pas par le noeud de service.

11. Noeud de service selon la revendication 10, dans lequel le moyen de gestion d'appels (56) est fourni sous forme logicielle.

12. Noeud de service selon la revendication 10 ou 11, dans lequel le moyen de commande de connexions (60) entre des abonnés est fourni sous forme logicielle.

13. Noeud de service selon l'une des revendications 10 à 12, dans lequel le moyen matériel (58) de réception de messages comprend un moyen pour enregistrer des messages vocaux.

14. Noeud de service selon l'une des revendications 10 à 13, dans lequel le moyen matériel (58) de réception de messages comprend un moyen pour recevoir des chiffres fournis par des abonnés.

15. Noeud de service selon l'une des revendications 10 à 14, comprenant en outre un moyen matériel (58) pour lire des messages aux abonnés.

16. Noeud de service selon l'une des revendications 10 à 15, dans lequel le moyen de commande de connexions (60) entre des abonnés comprend un moyen pour envoyer des signaux à des centraux auxquels sont connectés les abonnés.

17. Central téléphonique ayant des premier et deuxième abonnés qui lui sont connectés et ayant un moyen de connexion à un noeud de service, le central comprenant:
un moyen pour constater qu'un appel entrant du premier abonné au deuxième abonné nécessite une connexion au noeud de service ;
un moyen pour établir une première connexion de signalisation entre le premier abonné et le noeud de service ;
un moyen permettant une première connexion de support entre le premier abonné et le noeud de service, en réponse à un signal provenant du noeud de service ;
un moyen permettant une deuxième connexion de support entre le deuxième abonné et le noeud de service, en réponse à un signal provenant du noeud de service, la deuxième connexion de support étant indépendante de la première connexion de support ;
un moyen permettant une deuxième connexion de signalisation entre le deuxième abonné et le noeud de service ;
un moyen pour établir directement une troisième connexion de support entre le premier abonné et le deuxième abonné, en réponse à un signal provenant du noeud de service, et pour interrompre les première et deuxième connexions de support tout en conservant les première et deuxième connexions de signalisation.
